(19) Europäisches Patentamt
European Patent Office
Office européen des brevets

(11) **EP 4 749 700 A1**

(12) **EUROPEAN PATENT APPLICATION**
published in accordance with Art. 153(4) EPC

(43) Date of publication:
**27.05.2026 Bulletin 2026/22**

(21) Application number: **25795028.7**

(22) Date of filing: **21.04.2025**

(51) International Patent Classification (IPC):
*H01M 4/04* (2006.01)      *H01M 4/02* (2006.01)

(52) Cooperative Patent Classification (CPC):
**B05D 1/26; B05D 1/32; B05D 3/02; C09J 7/38;**
**H01M 4/02; H01M 4/04; H01M 4/13;** Y02E 60/10

(86) International application number:
**PCT/KR2025/005369**

(87) International publication number:
**WO 2025/225990 (30.10.2025 Gazette 2025/44)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **22.04.2024 KR 20240053075**

(71) Applicant: **LG Energy Solution, Ltd.**
**Seoul 07335 (KR)**

(72) Inventors:
• **AHN, Do Young**
**Daejeon 34122 (KR)**
• **KIM, Gue Hyung**
**Daejeon 34122 (KR)**
• **JEONG, Byeong Oh**
**Daejeon 34122 (KR)**
• **KWON, Oh Cheol**
**Daejeon 34122 (KR)**
• **SON, Jun Ho**
**Daejeon 34122 (KR)**
• **PARK, Bum Jo**
**Daejeon 34122 (KR)**

(74) Representative: **Plasseraud IP**
**104 Rue de Richelieu**
**CS92104**
**75080 Paris Cedex 02 (FR)**

(54) **METHOD FOR MANUFACTURING ELECTRODE AND ELECTRODE**

(57)     The present invention relates to a method for manufacturing an electrode and an electrode, including a step of attaching an adhesive tape, a coating step, a drying step, and a step of removing the adhesive tape, wherein in the step of attaching the adhesive tape, the adhesive tape is continuously attached along the transfer direction of the current collector sheet.

[FIG. 4]

AFTER P110          AFTER P120 AND P130          AFTER P140

EP 4 749 700 A1

**Description**

[Technical field]

This application claims the benefit of Korean Patent Application No. 10-2024-0053075, filed on April 22, 2024, the disclosure of which is incorporated herein by reference.

The present disclosure relates to a method for manufacturing an electrode using an adhesive tape, and an electrode manufactured by the method, wherein the method suppresses the detachment of the electrode active material.

[Background]

With the increasing development and demand for technologies in various industrial fields such as mobile devices, automobiles, and energy storage devices, the demand for batteries as an energy source has sharply increased. Among these secondary batteries, lithium secondary batteries, which have high energy density and discharge voltage, have been extensively studied and commercialized, and are widely used.

Secondary batteries are classified into cylindrical batteries and prismatic batteries, where the electrode assembly is housed in a cylindrical or prismatic metal can, and pouch-type batteries, where the electrode assembly is housed in a pouch-type case made of aluminum laminate sheets.

The positive and negative electrodes that make up the electrode assembly are manufactured by coating the electrode slurry, which is produced during the mixing process, onto an electrode current collector using a slot die in a predetermined pattern and at a consistent thickness, followed by drying. However, since the electrode slurry is a fluid, after the electrode slurry coating process, the fluidity of the electrode slurry causes it to flow down, this is called sliding.

Meanwhile, the positive electrode and negative electrode that constitute the electrode assembly are arranged facing each other with a separator interposed between them. The length of the sliding region of the positive electrode may differ from that of the negative electrode, and the inclined shape of the sliding region may appear as convex upward, convex downward, straight, S-shaped, and so on. Even if the inclined shape is the same, the inclination may vary. As a result, the negative electrode sliding region may have areas where the NP ratio is imbalanced locally depending on the contact position. An imbalance in the NP ratio can cause lithium to precipitate from the negative electrode, leading to safety hazards such as short circuits.

NP ratio imbalance tends to occur less likely when the ratio of negative electrode loading amount to positive electrode loading amount at the positive electrode/negative electrode interface is higher, theoretically. Therefore, recent technical efforts have focused on increasing negative electrode loading amount in the negative electrode sliding region. One such attempt involves applying a dam coating composition in an overlapping manner to the edge where the negative electrode slurry is applied, thereby suppressing the flow of the negative electrode slurry and minimizing the sliding length of the negative electrode active material layer. However, this technology has limitations in reducing the length of the sliding region.

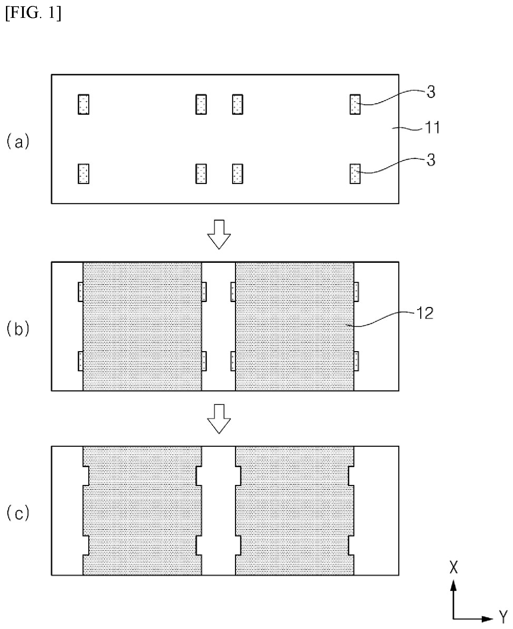

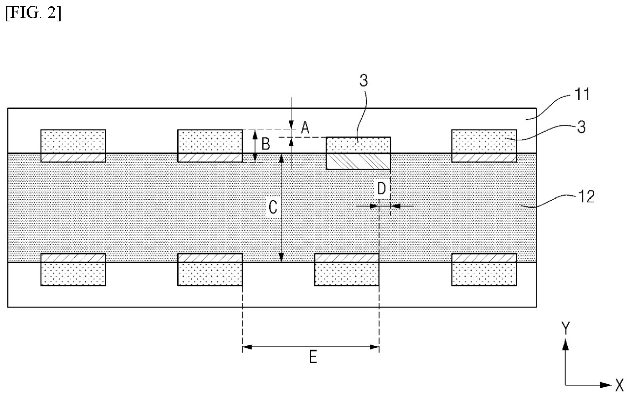

FIG. 1 illustrates a conventional technology for manufacturing electrodes using tape to reduce the length of the sliding region. Referring to FIG. 1, the electrode manufacturing method according to the conventional technology includes attaching multiple tapes 3 at certain spacings to the area where the electrode tabs are to be formed on the electrode current collector sheet 11, applying and drying the electrode slurry, and removing the tapes. At this time, since the tapes are attached to the areas where sliding regions are to be formed, a significant portion of the sliding regions may be removed from the electrode active material layer during the tape removal process, thereby reducing the length of the sliding regions. In the conventional technology, the tapes were intermittently attached to minimize the amount of electrode active material detached during the tape removal process. However, with this intermittent attachment method, there is a risk that the tape may peel off from the electrode current collector sheet due to hot air from the drying oven or physical external force during the electrode manufacturing process, as shown in FIG. 2, and there is a risk of tolerance variations depending on the attachment position of the tape. Additionally, this method has the drawback of reduced productivity due to the intermittent attachment process.

Therefore, there is a need for the development of an electrode manufacturing method that addresses these issues while suppressing the detachment of the electrode active material.

[Prior Art Document]

(Patent Document 1) Japanese Patent Publication No. 2005-183181

[Summary]

[Technical Problem]

The technical problem that the technical concept of the present disclosure seeks to solve is to provide an electrode that reduces the length of the sliding region.

Another technical problem that the technical concept of the present disclosure seeks to solve is to provide an electrode manufacturing method that minimizes the detachment phenomenon of the electrode while solving the problems associated with the intermittent attachment mentioned above when manufacturing the electrode using a tape.

[Technical Solution]

The electrode manufacturing method according to the exemplary embodiments includes: attaching an adhesive tape to edges of a coating part predetermined portion of an electrode current collector sheet, the coating part predetermined portion being where an electrode active material layer is to be formed; a coating step of applying an electrode slurry to the predetermined portion of the coating part; a drying step of removing solvent from the electrode slurry; and a step of peeling off and removing the adhesive tape from the electrode current collector sheet, wherein in the step of attaching the adhesive tape, the adhesive tape is continuously attached in a transfer direction of the electrode current collector sheet.

In exemplary embodiments, a thickness A of the adhesive tape, a thickness B of the electrode active material layer after the drying step, and an adhesive strength C of the adhesive tape may satisfy the following Condition 1:

[Condition 1]

$$0.15 \leq B/(A \times C)$$

In condition 1, A and B are values in $\mu$m, and C is the adhesive strength measured by a 90° peel test after attaching the adhesive tape to a SUS plate, and is a value in gf/inch.

In exemplary embodiments, the adhesive strength of the adhesive tape may be 20 gf/inch or less.

In exemplary embodiments, the thickness of the adhesive tape may be 150 $\mu$m or less.

In exemplary embodiments, the thickness of the electrode active material layer after the drying step may be 50 $\mu$m or more.

In exemplary embodiments, the adhesive tape may be a pressure-sensitive adhesive tape.

In exemplary embodiments, the coating step may include: an upper surface coating step of applying electrode slurry to an upper surface of the electrode current collector sheet; and a lower surface coating step of applying electrode slurry to a lower surface of the electrode current collector sheet, wherein the drying step may include: an upper surface drying step of drying the electrode slurry applied in the upper surface coating step; and a lower surface drying step of drying the electrode slurry applied in the lower surface coating step.

In exemplary embodiments, in the step of attaching the adhesive tape, the adhesive tape is attached to the upper surface and lower surface of the electrode current collector sheet, respectively, such that the adhesive tape may be attached to completely overlap with the electrode current collector sheet in between.

In exemplary embodiments, the adhesive tape may include: a base part having a predetermined width and extending along the transfer direction of the electrode current collector sheet; and a protruding part protruding from the base part toward the coating part predetermined portion along a transverse direction of the electrode current collector sheet.

The electrode manufacturing method according to exemplary embodiments may further include: a rolling step of roll-pressing the electrode current collector sheet with the electrode active material layer formed thereon after the step of removing the adhesive tape.

In exemplary embodiments, a binder content in the electrode slurry may be 5 parts by weight or less with respect to 100 parts by weight of a solid content of the electrode slurry.

An electrode according to exemplary embodiments includes: a coating part in which an electrode active material layer is laminated on an electrode current collector sheet; and a non-coating part located on at least one edge based on a transverse direction (Y direction) of the electrode current collector sheet, and having an electrode current collector sheet that is exposed, wherein in the electrode active material layer, an end surface with respect to, the transverse direction of the electrode active material layer is perpendicular to a plane of the electrode current collector sheet.

In exemplary embodiments, the electrode active material layer includes a sliding region where the thickness of the electrode active material layer gradually decreases in a direction from the coating part toward the non-coating part, and wherein a transverse direction length of the sliding region may be 1mm or less.

In exemplary embodiments, a ratio of a minimum thickness T2 of the sliding region to a maximum thickness T1 of the sliding region may be 0.8 or more.

[Advantageous Effects]

According to the exemplary embodiments of the present disclosure, the length of the sliding region of the electrode active material layer is significantly reduced, thereby providing an electrode with uniform loading amount.

According to the exemplary embodiments of the present disclosure, since the adhesive tape is continuously attached rather than intermittently attached, the risk of the adhesive tape detachment is reduced, the productivity of electrode manufacturing is improved, and the tolerance risk of attachment position associated with intermittent attachment is prevented.

According to the exemplary embodiments of the present disclosure, cracking in the electrode active material layer during the removal process of the adhesive tape can be suppressed, and the detachment rate of the electrode active material is reduced, resulting in the manufacture of electrodes with excellent capacity.

[Brief Description of the Drawings]

FIG. 1 is a drawing illustrating a conventional technology for manufacturing an electrode using tape.

FIG. 2 is a drawing illustrating the problems of the conventional technology.

FIG. 3 is a flowchart illustrating the electrode manufacturing method according to exemplary embodiments of the present disclosure.

FIG. 4 is a drawing illustrating the electrode manufacturing method according to exemplary embodiments.

FIG. 5 is a drawing showing various embodiments of attaching adhesive tape.

FIG. 6 is a flowchart illustrating the electrode manufacturing method according to exemplary embodiments of the present disclosure.

FIG. 7 is a drawing illustrating the problems encountered when performing the rolling step without removing the adhesive tape.

FIG. 8 is a drawing illustrating the notching step according to exemplary embodiments.

FIG. 9 is a flowchart illustrating the electrode manufacturing method according to exemplary embodiments.

FIG. 10 is a flowchart illustrating an electrode manufacturing method according to exemplary embodiments.

FIG. 11 is a schematic drawing of an electrode manufacturing system according to FIG. 10.

FIG. 12 is a drawing illustrating the electrode current collector sheet after the adhesive tape attachment step (P110).

FIG. 13 is a schematic drawing of an electrode manufacturing system according to another embodiment.

FIG. 14 is a drawing illustrating an adhesive tape according to exemplary embodiments.

FIG. 15 is a drawing illustrating the coating step according to exemplary embodiments.

FIG. 16 is a plan view and cross-sectional view of an electrode according to exemplary embodiments.

[Description of Reference Numerals].

11: ELECTRODE CURRENT COLLECTOR SHEET

12: ELECTRODE SLURRY, ELECTRODE ACTIVE MATERIAL LAYER

3: TAPE

30: ADHESIVE TAPE

100: ELECTRODE

110: MAIN BODY PART

11, 111: CURRENT COLLECTOR

112: COATING PART

120: ELECTRODE TAB

121: NON-COATING PART

122: ELECTRODE TAB COATING PART

[Best Mode for Carrying out the Invention]

The following provides a more detailed description of the present disclosure to aid in understanding the present disclosure.

The terms and words used in this specification and the claims should not be interpreted as limited to their conventional or dictionary meanings, but should be interpreted in accordance with the technical concepts of the disclosure, based on the principle that the inventor may appropriately define the concepts of the terms to describe the disclosure in the best possible manner.

The terms used in this specification are merely used to describe exemplary embodiments and are not intended to limit the scope of the disclosure. Unless the context clearly indicates otherwise, singular expressions include plural expressions.

In this specification, terms such as "include," "equipped with," or "have" are intended to specify the existence of the features, numbers, steps, components, or combinations thereof that are implemented, and should not be understood as precluding the possibility of the existence or addition of one or more other features, numbers, steps, components, or combinations thereof.

In this specification, the term "combinations thereof" included in a Markush-form expression refers to one or more mixtures or combinations selected from a group consisting of the components described in the Markush-form expression, meaning that it includes one or more selected from the group consisting of the components described in the Markush-form expression.

In this specification, the description "A and/or B" means "A or B or both."

In this specification, "%" means wt% unless otherwise explicitly stated.

In this specification, the transfer direction (MD) of the electrode current collector sheet is defined as the X direction, the transverse direction (TD) of the electrode current collector sheet is defined as the Y direction, and the direction perpendicular to the plane formed by the combination of the X direction and the Y direction is defined as the Z direction.

In this specification, the "coating part" refers to the region of the electrode current collector sheet where the electrode slurry is applied, and the "non-coating part" refers to the region of the electrode current collector sheet where the electrode slurry is not applied, thereby exposing the current collector.

In this specification, the adhesive strength of the adhesive tape can be measured as follows. An adhesive tape cut to a length of 150 mm and a width of 20 mm is prepared. Then the adhesive tape is positioned so that it faces a SUS (Steel Use Stainless) plate with a length of 75 mm and a width of 25 mm, and the adhesive tape is attached along the longitudinal direction of the SUS plate. That is, it has to be ensured that the SUS plate is attached to the region corresponding to half the longitudinal direction of the adhesive tape. Then, the adhesive tape is rolled 10 times using a roller to be evenly attached to prepare the test sample. Next, the SUS plate portion of the test sample is fixed to the sample stage of a universal testing machine (UTM) (LS5, AMETEK), and the half of the adhesive tape not attached to the SUS plate is connected to the load cell of the UTM equipment. By applying a force at a speed of 100 mm/min and at a 90° angle, the load cell is moved until it reaches 50 mm, and the load applied to the load cell is measured. During this process, the average value of the load measured within the 20 mm to 40 mm section of the travel range is calculated, and this process is repeated five times, and the average value is evaluated as the adhesive strength (gf/inch) of the adhesive tape.

**Electrode manufacturing method**

(First embodiment)

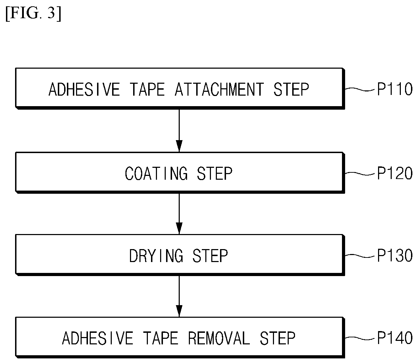

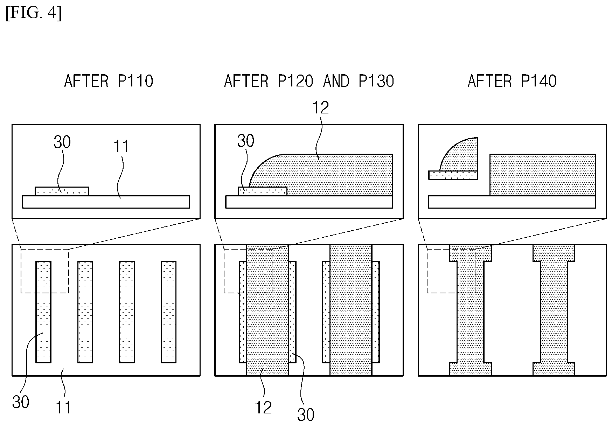

FIG. 3 is a flowchart illustrating the electrode manufacturing method according to exemplary embodiments, and FIG. 4 is a drawing illustrating the electrode manufacturing method according to exemplary embodiments.

Referring to these figures, the electrode manufacturing method according to the exemplary embodiments of the present disclosure may include an adhesive tape attachment step (P110), a coating step (P120), a drying step (P130), and an adhesive tape removal step (P140).

According to the electrode manufacturing method according to the exemplary embodiments of the present disclosure, adhesive tape 30 is attached to the edges of the coating part predetermined portion in the electrode current collector sheet 11, and while the adhesive tape 30 is attached to the electrode current collector sheet 11, an electrode slurry 12 is applied and dried, after which the adhesive tape 30 is peeled off. When the adhesive tape 30 is peeled off, the electrode active material layer 12 formed on the adhesive tape 30 is removed together, causing the end surface of the electrode active material layer to form an angle perpendicular to the current collector plane. This significantly reduces the length of the sliding region of the electrode active material layer 12 and provides an electrode with uniform loading amount. In particular, the electrode manufacturing method according to the present disclosure is significant in that it achieves a much better effect in reducing the length of the sliding region compared to conventional techniques that control the sliding length of the electrode active material layer by forming a dam coating layer.

The adhesive tape attachment step (P110) may involve attaching an adhesive tape 30 having a predetermined width to the edges of the coating part predetermined portion where the electrode active material layer is to be formed in the electrode current collector sheet 11.

Referring to FIG. 4, the adhesive tape 30 can be continuously attached along the transfer direction (X direction) on the continuously transported electrode current collector sheet 11. Since the adhesive tape 30 is continuously attached rather than intermittently, the risk of the adhesive tape detachment from the electrode current collector sheet 11 is reduced, the productivity of electrode manufacturing is improved, and the tolerance risk of attachment position due to intermittent attachment is prevented.

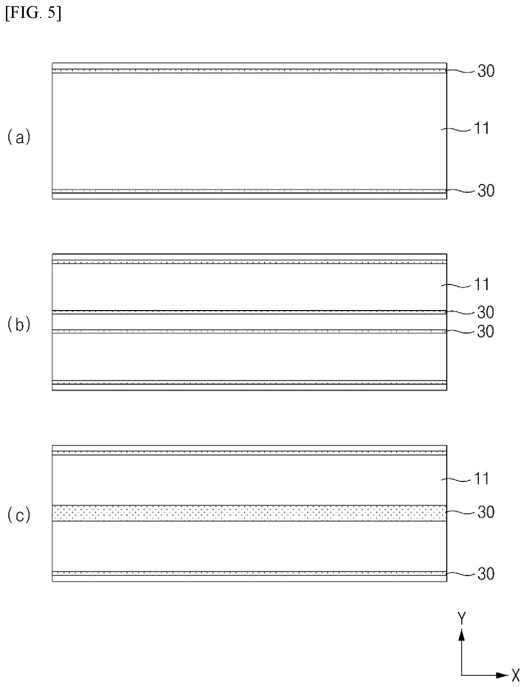

FIG. 5 is a drawing showing various embodiments of attaching adhesive tape. Referring to FIG. 5, the adhesive tape 30 can be attached at an appropriate position corresponding to the coating pattern of the electrode slurry. Referring to (a) of FIG. 5, when the electrode slurry is applied in a single row, the adhesive tape 30 can be attached to each of both edges in the transverse direction (Y direction) of the coating part predetermined portion in a single row. Referring to (b) of FIG. 5, when the electrode slurry is applied in two rows, the adhesive tape 30 can be attached to each of both edges of the coating part predetermined portion in two rows. Referring to (c) of FIG. 5, when the electrode slurry is applied in two rows, the adhesive tape 30 having a relatively wide width may be attached between the coating part predetermined portion and another coating part predetermined portion. In FIG. 5, the adhesive tape is shown attached to both edges in the transverse direction of the coating part predetermined portion, but it is not limited thereto, and it may be attached to only one edge.

In exemplary embodiments, the adhesive tape 30 is preferably a pressure-sensitive adhesive tape (PSA) that can be easily removed after being attached to the electrode current collector sheet 11. During the drying step (P130), as the solvent in the electrode slurry is removed, a force causing the electrode slurry to contract acts. If the adhesive tape 30 is a heat-peelable tape, the heat-peelable tape expands in volume due to the thermal energy during the drying step. At this time, if the volume expansion occurs unevenly, cracks may form. On the other hand, the pressure-sensitive adhesive tape does not undergo volume expansion during the drying step (P130), thus avoiding such issues. Therefore, the pressure-sensitive adhesive tape is more preferable as the adhesive tape of the present disclosure.

In exemplary embodiments, the thickness A of the adhesive tape, the thickness B of the electrode active material layer after the drying step, and the adhesive strength C of the adhesive tape may satisfy the following Condition 1.

[Condition 1]

$$0.15 \leq B/(A \times C)$$

In condition 1, A and B are values in $\mu$m, and C is the adhesive strength measured by a 90° peel test after attaching the adhesive tape to a SUS plate, and is a value in gf/inch.

According to the present disclosure, by controlling the thickness of the adhesive tape, the adhesive strength of the adhesive tape, and the thickness of the electrode active material layer after the drying step to satisfy Condition 1, the detachment of the electrode active material can be effectively prevented.

In exemplary embodiments, the thickness of the adhesive tape may be 150 $\mu$m or less, preferably 80 $\mu$m or less, more preferably 40 $\mu$m or less, and most preferably within the range of 5 to 20 $\mu$m. The smaller the thickness of the adhesive tape, the more desirable it is in terms of suppressing the detachment of the electrode active material; however, if it is too small, mechanical strength may decrease, leading to the adhesive tape breaking during removal, which is undesirable.

In exemplary embodiments, after the drying step, the thickness of the electrode active material layer is 50 $\mu$m or more, preferably 70 $\mu$m or more, and more preferably within the range of 80 to 160 $\mu$m. Here, the thickness refers to the thickness of the electrode active material layer located on one side of the current collector sheet. In the case of a double-sided electrode where the electrode active material layer is present on both sides of the current collector, the total thickness of the electrode active material layer is twice the above range. Additionally, the thickness may represent the average thickness of the portion of the electrode active material layer excluding the sliding region. The larger the thickness of the electrode active material layer, the more desirable it is in terms of suppressing the detachment of the electrode active material.

In exemplary embodiments, the thickness ratio (A/B) of the adhesive tape thickness A to the electrode active material layer thickness B after the drying step may be in the range of 0.05 to 0.5, preferably 0.05 to 0.25, and more preferably 0.05 to 0.1. When the thickness ratio value satisfies the above range, it is possible to suppress the detachment of the electrode active material while ensuring the mechanical strength of the adhesive tape. If the thickness ratio value is excessively large, the peel strength of the adhesive tape may decrease. Conversely, if the thickness ratio value is excessively small, it may be difficult to apply the electrode slurry onto the adhesive tape.

In exemplary embodiments, the adhesive strength of the adhesive tape may be 20 gf/inch or less, preferably 10 gf/inch or less, and more preferably 5 gf/inch or less. The lower the adhesive strength of the adhesive tape, the more desirable it is in terms of suppressing the detachment of the electrode active material. However, if the adhesive strength of the adhesive tape exceeds the above range, wrinkles may form on the current collector sheet after removing the adhesive tape, which is undesirable.

The coating step (P120) may be a step of applying the electrode slurry to the coating part predetermined portion of the electrode current collector sheet 11. In one embodiment, the coating step (P120) may be performed as a continuous process in which the electrode slurry is continuously applied to the electrode current collector sheet 11 as it is transferred in the transfer direction (X direction). In one embodiment, the means for applying the electrode slurry may be a slot die coater configured to discharge the electrode slurry. However, this is not limited thereto.

In the coating step (P120), the electrode slurry may be applied over the coating part predetermined portion and a portion of the adhesive tape. During the process of removing the adhesive tape, to peel the adhesive tape from the current collector sheet, it is necessary to pull the adhesive tape from the area where the electrode slurry is not applied. Therefore, it is preferable that the electrode slurry is not applied to the one-sided region of the adhesive tape facing the non-coating part. The adhesive tape is positioned at the edges of the coating part predetermined portion, so part or all of the electrode sliding region may be formed on the adhesive tape.

The electrode slurry may be a positive electrode slurry or a negative electrode slurry. Generally, secondary batteries are designed with an NP ratio of 1 or higher, and the shorter the length of the sliding region of the negative electrode, the greater the reduction in the risk of NP ratio reversal. Therefore, the manufacturing method according to the present disclosure may be more effective during the manufacturing of the negative electrode.

In exemplary embodiments, the electrode slurry can be applied onto the electrode current collector sheet 11 at a loading amount such that the thickness of the electrode active material layer after the subsequent drying step (P130) is 50 $\mu$m or more, preferably 70 $\mu$m or more, and more preferably in the range of 80 to 160 $\mu$m. Here, the thickness may be the average thickness of the portion excluding the sliding region within the electrode active material layer.

In exemplary embodiments, the electrode slurry may be prepared by mixing and stirring an electrode active material, a binder, a conductive material, and other additives in a solvent.

The solvent may be a solvent commonly used in the relevant technical field, such as dimethyl sulfoxide (DMSO), isopropyl alcohol, N-methylpyrrolidone (NMP), acetone, or water, and one or more of these may be used alone or in combination. The solvent is preferably included in an amount that provides an appropriate viscosity considering the applicability and processability of the electrode slurry.

The solvent may be included in an amount sufficient to achieve the appropriate viscosity and solid content. For example, the solvent may be included in an amount such that the solid content in the electrode slurry is 40 wt% to 75 wt%, specifically 45 wt% to 70 wt%, and more specifically 45 wt% to 60 wt%. Additionally, the electrode slurry may have a coating-appropriate viscosity, and the electrode active material layer formed from the electrode slurry may have a thickness of a certain level or higher, thereby ensuring excellent energy density.

In exemplary embodiments, the electrode slurry may include a binder in an amount of 5 parts by weight or less, preferably 1 to 5 parts by weight, and more preferably 1.5 to 4 parts by weight, based on 100 parts by weight of the solid content of the electrode slurry. When the binder content is within the above-mentioned range, the electrode exhibits the required adhesion while mitigating electrode breakage or active material detachment when peeling off the adhesive tape.

In exemplary embodiments, the transfer speed of the electrode current collector sheet may be 20 m/min or higher, more specifically 30 to 120 m/min, and more specifically 40 to 100 m/min. The lower the transfer speed of the electrode current collector sheet, the more desirable it is in terms of suppressing the detachment of the electrode active material. However, if the transfer speed is too low, productivity may decrease.

The drying step (P130) is a step for removing the solvent from the electrode slurry and can be performed using a conventional electrode drying device.

In exemplary embodiments, the drying temperature in the drying step (P130) may be in the range of 50°C to 200°C, but is not limited thereto. The electrode is dried by passing through a plurality of drying zones, and the drying temperature of each drying zone may be independently set. The drying temperature of each drying zone may be appropriately set considering the effect on the electrode during the peeling of the adhesive tape according to the present disclosure, the coating form of the electrode slurry, the solid content of the electrode slurry, the loading amount of the electrode slurry, etc.

In one embodiment, the drying temperature of each drying zone in the front section is set to a relatively high temperature, the drying temperature of each drying zone in the middle section is set to a relatively lower temperature than that of the front section, and the drying zone in the rear section is set to a cooling section with a temperature between the drying temperature of the previous drying zones and room temperature. Additionally, the drying temperature may gradually decrease along the transfer direction of the electrode, remain constant in certain drying zones, or decrease and then increase again along the transfer direction of the electrode.

If the drying temperature during the drying step is too high, the difference in elongation rate between the non-coating and coating part may become severe, causing wrinkles in the non-coating part, reducing adhesive strength, and potentially leading to electrode cracks due to over-drying. Conversely, if the drying temperature is too low, the time required for electrode drying becomes excessively long, which is undesirable from a productivity perspective.

The step of peeling off and removing the adhesive tape (P140) may be the step of peeling off and removing the adhesive tape 30 from the electrode current collector sheet 11 as shown in FIG. 4. As the adhesive tape is removed, part or all of the sliding region of the electrode active material layer 12 formed on the adhesive tape 30 may be removed along with it.

The method for peeling off the adhesive tape is not particularly limited. The adhesive tape may be lifted while pressing down on the portion where the electrode active material layer is not formed on the adhesive tape, thereby removing the adhesive tape from the current collector sheet, or the adhesive tape may be peeled off by using an adsorbing means to adsorb the adhesive tape.

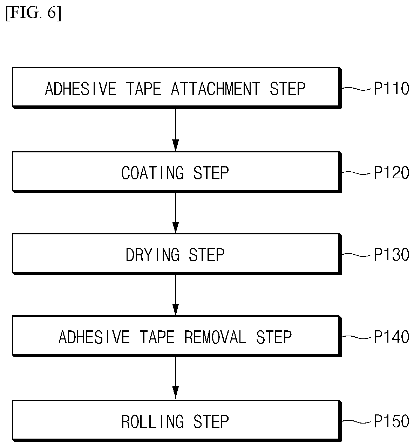

FIG. 6 is a flowchart illustrating a method of manufacturing an electrode according to exemplary embodiments of the present disclosure. Referring to FIG. 6, the method of manufacturing an electrode according to exemplary embodiments of the present disclosure may further include a rolling step (P150) after the step of removing the adhesive tape (P140). The rolling step (P150) may be performed by roll-pressing the electrode current collector sheet on which the electrode active material layer is formed.

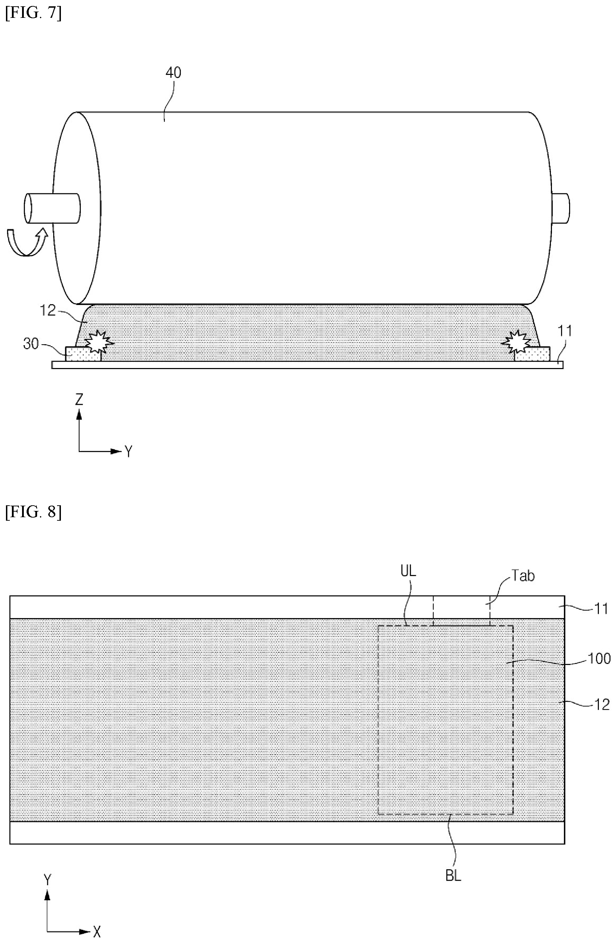

FIG. 7 is a drawing illustrating the issues that arise when performing the rolling step without removing the adhesive tape. Referring to FIG. 7, when the rolling step is performed with the adhesive tape still attached, stress generated at the edge part of the adhesive tape 30 having a predetermined thickness may cause cracks in the electrode active material layer. Therefore, it is preferable to perform the rolling step after removing the adhesive tape 30 from the electrode current collector sheet 11.

The roll-pressing method is not particularly limited, and the rolling step (P150) may be performed using the rolling roller 40 shown in FIG. 7. Although only one rolling roller 40 is shown in FIG. 7, the rolling step (P150) can be performed by passing the electrode current collector sheet 11 with the electrode active material layer 12 formed thereon between a pair of rolling rollers 40.

The electrode manufacturing method according to the exemplary embodiments of the present disclosure may further include a notching step (P160) of notching electrode tabs on the non-coating part after the rolling step (P150), and a cutting step (P170) of cutting the electrode current collector sheet with the electrode active material layer formed into the size of a unit electrode after the rolling step (P150).

FIG. 8 is a drawing illustrating the notching step according to exemplary embodiments. Referring to FIG. 8, notching along the notching predetermined line (dashed line) located on the non-coating part forms the electrode tab, and cutting along the cutting predetermined line (dashed line) located on the coating part yields the unit electrode 100.

In the notching step (P150) according to one embodiment, the electrode tab can be notched such that the boundary between the coating part where the electrode active material layer 12 is formed and the non-coating part 11 where the electrode active material layer is not formed is located within the electrode tab region. Referring to FIG. 8, when setting the notching and cutting predetermined lines, the notching predetermined line of the electrode tab is set to extend across the non-coating part 11 and the coating part 12, and the upper cutting predetermined line UL and lower cutting predetermined line BL of the electrode are set to be located on the inner region of the coating part 12. In this case, not only the electrode tab but also the electrode main part may not include an electrode sliding region, or even if it does, the length of the sliding region is likely to be very small, thereby effectively preventing the risk of NP-ratio reversal.

(Second Embodiment)

The second embodiment differs from the first embodiment described above in that it is a method for manufacturing a double-sided electrode in which an electrode active material layer is formed on both sides of the electrode current collector sheet.

According to the second embodiment, the coating step (P120) includes: an upper surface coating step (P121) for applying an electrode slurry to the upper surface of the current collector sheet; and a lower surface coating step (P122) for applying the electrode slurry to the lower surface of the current collector sheet, and the drying step (P130) includes: an upper surface drying step (P131) for drying the electrode slurry applied in the upper surface coating step; and a lower surface drying step (P132) for drying the electrode slurry applied in the lower surface coating step.

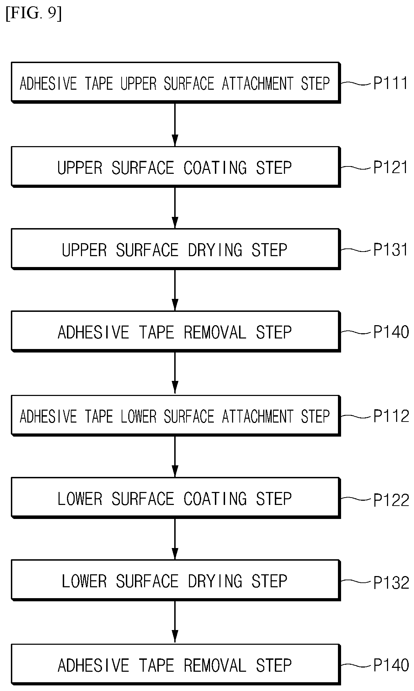

FIG. 9 is a flowchart illustrating an electrode manufacturing method according to exemplary embodiments. Referring to FIG. 9, an adhesive tape upper surface attachment step (P111), the upper surface coating step (P121), an upper surface drying step (P131), an adhesive tape removal step (P140), an adhesive tape lower surface attachment step (P112), a lower surface coating step (P132), and an adhesive tape removal step (P140) can be sequentially performed.

According to this embodiment, the upper surface drying step is performed with the adhesive tape not attached to the lower surface of the electrode current collector sheet, and the lower surface drying step is performed with the adhesive tape not attached to the upper surface of the electrode current collector sheet. This prevents the adhesive tape attached to the opposite surface of the drying surface from affecting the current collector sheet during the drying steps.

In the embodiment shown in FIG. 9, the adhesive tape removal step (P140) is performed after the upper surface drying step and after the lower surface drying step, respectively; however, alternatively, the adhesive tape attached to both the upper and lower surfaces can be removed in a single step after the drying step.

(Third Embodiment)

The third embodiment is similar to the second embodiment in that it is a method for manufacturing a double-sided electrode, but differs from the second embodiment in the adhesive tape attachment step.

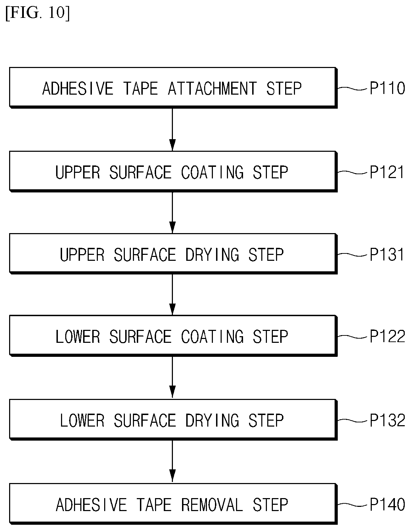

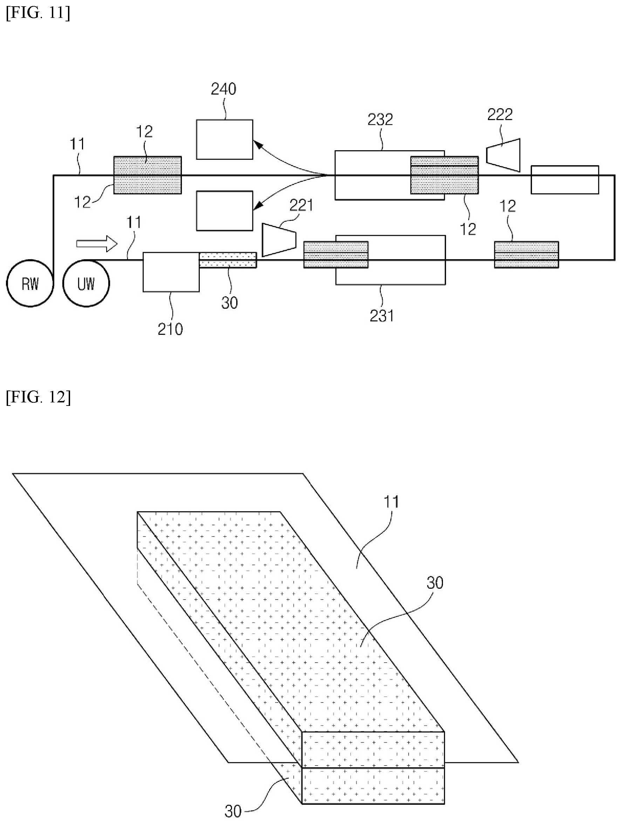

FIG. 10 is a flowchart illustrating the electrode manufacturing method according to exemplary embodiments, and FIG. 11 is a schematic drawing of the electrode manufacturing system according to FIG. 10.

Referring to FIG. 11, in the exemplary embodiments, the electrode current collector sheet 11 unwound from the unwinder UW sequentially passes through the adhesive tape attachment part 210, the first coating part 221, a first drying part 231, a second coating part 222, a second drying part 232, and an adhesive tape recovery part 240 in sequence. Accordingly, the method of manufacturing the electrode according to the second embodiment may sequentially perform, as shown in FIG. 10, an adhesive tape attachment step (P110), upper surface coating step (P121), upper surface drying step (P131), lower surface coating step (P122), lower surface drying step (P132), and adhesive tape removal step (P140).

According to the third embodiment, in the adhesive tape attachment step (P110), the adhesive tape 30 is attached to the upper surface and lower surface of the electrode current collector sheet 11, respectively, such that the adhesive tape is attached to completely overlapped with the electrode current collector sheet 11 in between.

FIG. 12 is a drawing showing the electrode current collector sheet after the adhesive tape attachment step (P110). Referring to FIG. 12, in the adhesive tape attachment step (P110), the adhesive tape 30 is simultaneously attached to the upper surface and lower surface of the electrode current collector sheet 11, thereby enabling the region where the adhesive tape is attached on the upper surface and the region where the adhesive tape is attached on the lower surface to be completely overlapped with each other. According to the third embodiment, the risk of tolerance errors in the attachment position of the adhesive tape can be reduced.

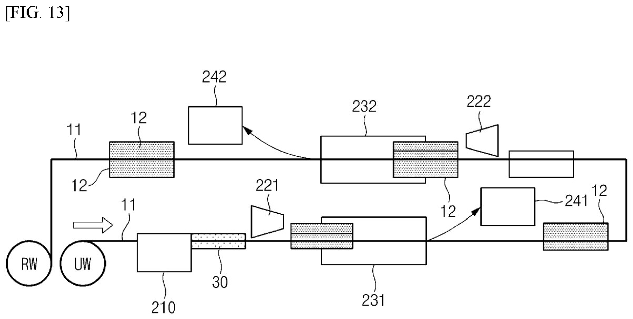

FIG. 13 is a schematic drawing of an electrode manufacturing system according to another embodiment. Referring to FIG. 13, the electrode current collector sheet 11 unwound from the unwinder UW can sequentially pass through the adhesive tape attachment part 210, the first coating part 221, the first drying part 231, the first recovery part 241 of the adhesive tape, the second coating part 222, the second drying part 232, and the second recovery part 242 of the adhesive tape. As described above, the adhesive tape removal step (P140) may be performed after the upper surface drying step (P131) and after the lower surface drying step (P132).

(Fourth Embodiment)

The fourth embodiment differs from the first embodiment in that the adhesive tape has a protruding part protruding toward the coating part predetermined portion along the transverse direction (TD, Y direction) of the electrode current collector sheet.

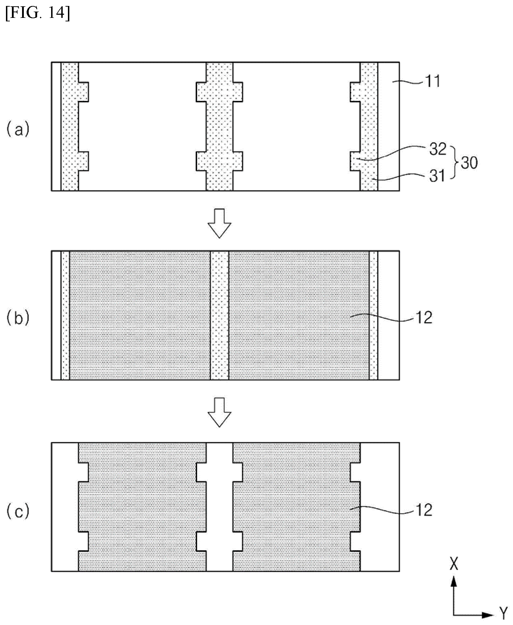

FIG. 14 is a drawing illustrating the adhesive tape according to exemplary embodiments. Referring to FIG. 14, the adhesive tape 30 includes a base part 31 having a predetermined width and extending along the transfer direction (X direction) of the electrode current collector sheet; and a protruding part 32 that protrudes from the base part 31 toward the coating part predetermined portion in the transverse direction (Y direction) of the electrode current collector sheet.

The adhesive tape 30 having such a shape is continuously attached along the transfer direction (X direction) of the electrode current collector sheet 11, thereby preventing the adhesive tape from detaching from the current collector sheet during the electrode manufacturing process. Furthermore, as the drying step is performed while the base part is attached to the non-coating part, the occurrence of wrinkles in the non-coating part during the drying step can be suppressed. In addition, the occurrence of wrinkles is prevented, thereby preventing cracks from forming in the electrode active material layer. Furthermore, the electrode active material layer 12a formed between the protruding part and the adjacent protruding part is a portion that is discarded during subsequent notching and cutting steps. Therefore, even if some of the electrode active material layer detachment occurs during the removal of the adhesive tape, it does not affect the unit electrode, thereby preventing a decrease in electrode capacity.

In exemplary embodiments, the transverse direction length (a) of the base part is 1 mm or more, more specifically 3 to 50 mm, and more specifically 5 to 40 mm. The protrusion length (b) of the protruding part is 1 mm or more, more specifically 3 to 25 mm. The total sum of the transverse direction length of the base part and the protrusion length of the protrusion part (a+b) may be 2 mm or more, more specifically 5 to 60 mm, and more specifically 10 to 50 mm.

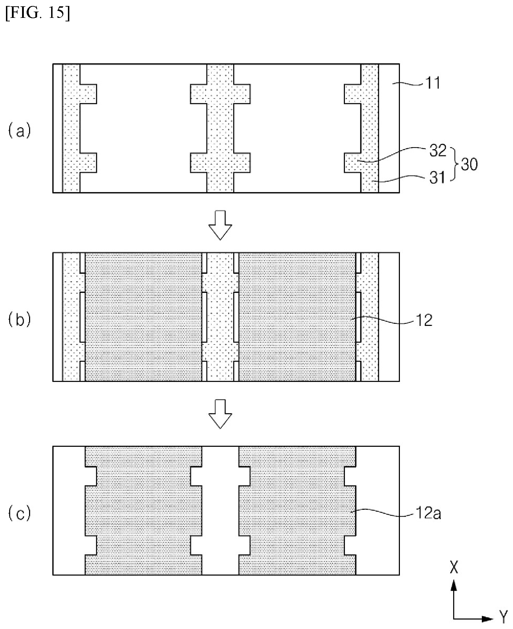

FIG. 15 is a drawing illustrating the coating steps according to exemplary embodiments.

Referring to FIGS. 14 and 15, the transverse direction (Y direction) length of the electrode slurry 12 shown in FIG. 15 is shorter than the transverse direction (Y direction) length of the electrode slurry (12) shown in FIG. 14. When the electrode slurry is coated as shown in FIG. 15, the amount of electrode active material that is detached during the removal of the adhesive tape may be reduced, making it more desirable.

## Electrode

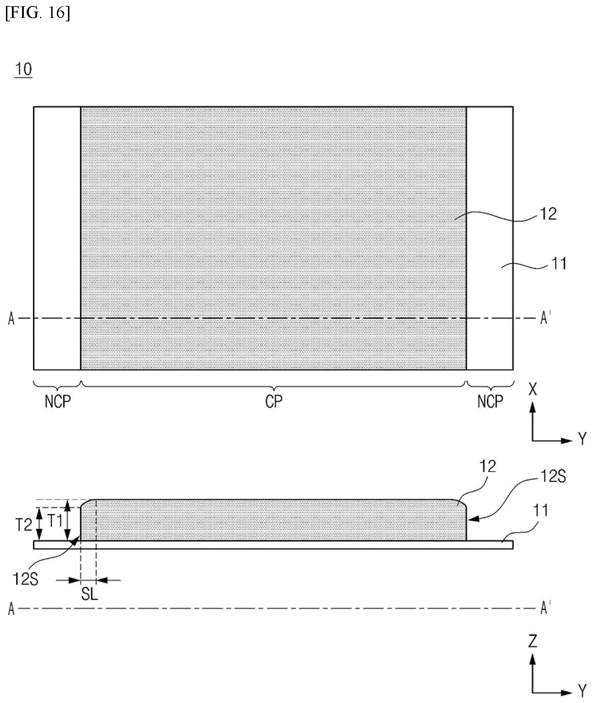

FIG. 16 is a plan view and cross-sectional view of the electrode according to exemplary embodiments.

Referring to the drawings, the electrode 10 according to the exemplary embodiments includes: a coating part CP in which an electrode active material layer 12 is laminated on an electrode current collector sheet 11; and a non-coating part NCP located on at least one edge of the electrode current collector sheet 11 with respect to the transverse direction (Y direction) thereof, and having the electrode current collector sheet 11 that is exposed. The electrode according to the exemplary embodiments of the present disclosure may be manufactured according to the manufacturing method described above. Specifically, the electrode 10 may be manufactured by: attaching an adhesive tape 30 to the transverse direction (Y direction) edge of the coating part predetermined portion of the electrode current collector sheet 11, then applying an electrode slurry to the coating part predetermined portion to form an electrode active material layer 12, and removing the adhesive tape 30 from the electrode current collector sheet 11. As a result, the entire or a significant portion of the sliding region formed at the transverse direction (Y direction) edge of the electrode active material layer is removed along with the adhesive tape 30 during the removal step, thereby significantly reducing the transverse direction (Y direction) length of the electrode sliding region.

In the electrode active material layer 12, the end surface 12S with respect to the transverse direction (Y direction) of the electrode active material layer 12, may be perpendicular to the plane of the electrode current collector sheet 11. Here, "perpendicular" means that the end surface 12S of the electrode active material layer 12 forms an angle close to perpendicular with respect to the plane of the current collector sheet, for example, 80 to 100°, preferably 85 to 97°, more preferably 87 to 95°, most preferably 89 to 91°.

To ensure that the end surface 12S of the electrode active material layer is perpendicular to the electrode current collector sheet 11, when removing the adhesive tape 30 from the electrode current collector sheet 11, the adhesive tape 30 is lifted along the transfer direction (X direction) of the electrode current collector sheet, such that the direction perpendicular to the plane of the electrode current collector sheet 11 (Z direction) becomes the direction in which the adhesive tape 30 is lifted.

In exemplary embodiments, the electrode active material layer 12 may include a sliding region (SL) where the thickness of the electrode active material layer 12 gradually decreases in the direction from the coating part (CP) toward the non-coating part (NCP). The electrode 10 is manufactured according to the aforementioned electrode manufacturing method, such that the transverse direction (Y direction) length of the sliding region (SL) is 1.0 mm or less, preferably 0.9 mm or less, and more preferably within the range of 0.1 mm to 0.8 mm. The transverse direction (Y direction) length of the sliding region (SL) is significantly reduced compared to the transverse direction length of the sliding region of an electrode manufactured by the method of applying the conventional dam coating composition in an overlapping manner. An electrode according to an embodiment has an effect of significantly preventing the risk of NP-ratio reversal, as the transverse direction (Y direction) length of the sliding region is controlled to be 1.0 mm or less.

In one embodiment, the thickness of the electrode active material layer 12 is 50 $\mu$m or more, preferably 70 $\mu$m or more, and more preferably within the range of 80 to 160 $\mu$m. Here, the thickness of the electrode active material layer refers to the thickness after drying of the electrode and can be measured using measurement equipment such as a Tesa height gauge.

As the thickness of the electrode active material layer 12 increases, the detachment rate of the electrode active material during the peeling off and removal of the adhesive tape 30 may decrease; however, if the thickness of the electrode active material layer 12 is too thick, the peelability of the adhesive tape may be limited. Therefore, it is preferable to set the thickness range of the electrode active material layer 12 within the above-mentioned range.

In exemplary embodiments, the ratio value (=T2/T1) of the minimum thickness T2 of the sliding region to the maximum thickness T1 of the sliding region is 0.8 or higher, preferably 0.85 to 1, more preferably 0.9 to 1, and most preferably 0.95 to 1. When the value of T2/T1 satisfies the above range, the step of the sliding region (SL) is small, making it easier to manage the NP-ratio between the positive electrode and negative electrode.

In one embodiment, the slope of the sliding region (SL) is 0.005 or higher, more specifically 0.007 to 0.1, and more specifically 0.01 to 0.05. Here, the slope of the sliding region is defined as the ratio of the difference between the maximum thickness T1 of the electrode active material layer in the sliding region and the minimum thickness T2 of the electrode active material layer in the sliding region, divided by the transverse direction (Y direction) length a of the sliding region (SL) [=(T1-T2)/a]. When the slope of the sliding region (SL) satisfies the above range, it may be easier to manage the NP-ratio between the positive electrode and negative electrode.

In one embodiment, the electrode may be a negative electrode. Since the risk of NP-ratio reversal is high in the sliding region of the negative electrode, using an electrode with a significantly reduced length of the sliding region as the negative electrode can more effectively prevent NP-ratio reversal risk.

In one embodiment, the negative electrode may include a negative electrode current collector and a negative electrode active material layer, and the negative electrode active material layer may be manufactured by applying and drying a negative electrode slurry containing negative electrode active material on the negative electrode current collector. The negative electrode slurry can be manufactured by mixing and stirring a solvent, negative electrode active material, binder, and conductive material together, and may optionally include additives such as dispersants.

The negative electrode current collector may be any metal that is highly conductive and allows the negative electrode slurry to adhere easily, and is non-reactive within the voltage range of the battery, specifically, copper, stainless steel, aluminum, nickel, titanium, sintered carbon; stainless steel surface-treated with carbon, nickel, titanium, or silver; aluminum-cadmium alloys; non-conductive polymers with surface treated with a conductive material; or conductive polymers may be used. Additionally, the surface may be formed with microscopic irregularities to enhance the coupling force of the negative electrode active material, and it can be used in various forms such as films, sheets, foils, nets, porous materials, foamed materials, and non-woven materials.

The negative electrode active material may be a compound capable of reversible intercalation and deintercalation of lithium. Specific examples include carbon-based materials such as artificial graphite, natural graphite, graphitized carbon fibers, and amorphous carbon; metallic compounds that can be alloyed with lithium, such as Si, Al, Sn, Pb, Zn, Bi, In, Mg, Ga, Cd, Si alloys, Sn alloys, or Al alloys; metal oxides capable of doping and dedoping lithium, such as $SiO_x$ ($0 < x < 2$), $SnO_2$, vanadium oxides, and lithium vanadium oxides; or composites including the metallic compounds and carbon-based materials, such as Si-C composites or Sn-C composites, and any one or more of these mixtures may be used. A metallic lithium thin film may also be used as the negative electrode active material.

The carbon-based materials may specifically include both low-crystalline carbon and high-crystalline carbon. Examples of low-crystalline carbon include soft carbon and hard carbon, while examples of high-crystalline carbon include natural graphite, artificial graphite, Kish graphite, pyrolytic carbon, mesophase pitch based carbon fiber, mesocarbon microbeads, mesophase pitches, and petroleum or coal tar pitch derived cokes. Specifically, graphite-based negative electrode active materials such as natural graphite or artificial graphite are more desirable because they can maintain their structural and electrical properties while enabling reversible intercalation and deintercalation of lithium ions.

The negative electrode active material may be included in a range of approximately 80 wt% to 99.5 wt% or 88 wt% to 99 wt% of the total weight of the negative electrode active material layer, but the content is not limited to the above range.

The binder is not specifically limited as long as it is a component that can assist in the coupling of the negative electrode active material and conductive materials, or in the coupling to the current collector, and may include, for example, polyvinylidene fluoride, polyvinyl alcohol, carboxymethyl cellulose (CMC), starch, hydroxypropyl cellulose, regenerated cellulose, polyvinylpyrrolidone, tetrafluoroethylene, polyethylene, polypropylene, ethylene-propylene-diene monomer (EPDM), sulfonated EPDM, styrene-butadiene rubber, fluorinated rubber, various copolymers, etc.

The binder is preferably an aqueous binder when the solvent of the negative electrode slurry is an aqueous solvent such as water. In specific examples, aqueous binders may be one or more selected from the group consisting of styrene-butadiene rubber, acrylate styrene-butadiene rubber, acrylonitrile-butadiene rubber, acrylonitrile-butadiene-styrene rubber, acrylic rubber, butyl rubber, fluorinated rubber, polytetrafluoroethylene, polyethylene, polypropylene, ethylene-propylene copolymer, polyethylene oxide, polyvinyl pyrrolidone, polyepichlorohydrin, polyphosphazene, polyacrylonitrile, polystyrene, ethylene-propylene-diene copolymer, polyvinyl pyridine, chlorosulfonated polyethylene, latex, polyester resin, acrylic resin, phenolic resin, epoxy resin, polyvinyl alcohol, hydroxypropyl methylcellulose, hydroxypropyl cellulose, and diacetyl cellulose. In a specific example, the aqueous binder may be selected from one or more of the following: styrene-butadiene rubber, acrylate styrene-butadiene rubber, acrylonitrile-butadiene rubber, and acrylonitrile-butadiene-styrene rubber. For example, the aqueous binder may be a styrene-butadiene rubber.

The binder may typically be included in an amount of 1 to 30 wt% based on the total weight of the negative electrode active material layer.

The conductive material is not specifically limited as long as it possesses conductivity without causing chemical changes in the battery, and examples include graphite such as natural graphite or artificial graphite; carbon black such as carbon black, acetylene black, ketjen black, channel black, furnace black, lamp black, thermal black, etc.; conductive fibers such as carbon fibers or metal fibers; conductive tubes such as carbon nanotubes; metal powders such as fluorocarbon, aluminum, or nickel powder; Zinc oxide, potassium titanate, and other conductive whiskers; titanium oxide and other conductive metal oxides; polyphenylene derivatives and other conductive materials.

The conductive material can typically be included at 1 to 30 wt% based on the total weight of the negative electrode active material layer.

The fillers are selectively used as components to suppress the expansion of the electrode and are not particularly limited as long as they are fiber-like materials that do not cause chemical changes in the battery, and for example, may use olefin-based polymers such as polyethylene and polypropylene; glass fibers, carbon fibers, etc.

In one embodiment of the present disclosure, the electrode may be a positive electrode. The positive electrode may include a positive electrode current collector and a positive electrode active material layer, and the positive electrode active material layer may be formed by applying a positive electrode slurry containing a positive electrode active material on the positive electrode current collector and drying it. The positive electrode slurry may be manufactured by mixing and stirring a solvent, positive electrode active material, binder, and conductive material together, and may optionally include additives such as a dispersant.

In the positive electrode, the positive electrode current collector is not particularly limited as long as it has conductivity without causing chemical changes in the battery, and examples include stainless steel, aluminum, nickel, titanium, sintered carbon, or aluminum or stainless steel with surfaces treated with carbon, nickel, titanium, silver, etc. Additionally, the positive electrode current collector typically has a thickness of 3 to 500 $\mu$m, and the surface of the current collector may be formed with microscopic irregularities to enhance the adhesive strength of the positive electrode active material. For example, it may be used in various forms such as film, sheet, foil, net, porous material, foam, non-woven fabric.

The positive electrode active material is not specifically limited and may include any compound known in the art that is capable of reversible intercalation and deintercalation of lithium. Specifically, the positive electrode active material may include layered compounds such as lithium cobalt oxide ($LiCoO_2$), lithium nickel oxide ($LiNiO_2$), or compounds substituted with one or more transition metals; lithium manganese oxides such as $Li_{1+x}Mn_{2-x}O_4$ (where x is 0 to 0.33), $LiMnO_3$, $LiMn_2O_3$, $LiMnO_2$, etc.; lithium copper oxide ($Li_2CuO_2$); vanadium oxides such as $LiV_3O_8$, $LiV_3O_4$, $V_2O_5$, $Cu_2V_2O$, etc.; Ni site-type lithium nickel oxide with a chemical formula $LiNi_{1-x}M_xO_2$ (where M = Co, Mn, Al, Cu, Fe, Mg, B, or Ga, and x = 0.01 to 0.3); lithium manganese composite oxide represented by a chemical formula $LiMn_{2-x}M_xO_2$ (where M = Co, Ni, Fe, Cr, Zn, or Ta, and x = 0.01 to 0.1) or $Li_2Mn_3MO_8$ (where M = Fe, Co, Ni, Cu, or Zn); lithium manganese composite oxide with a spinel structure represented by a chemical formula $LiNi_xMn_{2-x}O_4$; $LiMn_2O_4$ where part of the Li in the chemical formula is substituted by alkali metal ions; disulfide compounds; lithium iron phosphate represented by $LiFePO_4$; $Fe_2(MoO_4)_3$, etc., but it is not limited to these.

The positive electrode active material layer may include the positive electrode active material described above, as well as a positive electrode conductive material and a positive electrode binder.

The positive electrode conductive material is used to impart conductivity to electrodes and include carbon black, graphite, carbon fibers, carbon nanotubes, metal powders, conductive metal oxides, and organic conductive materials. Currently available commercial products include acetylene black series (Chevron Chemical Company or Gulf Oil Company products, etc.), Ketjen Black EC series (Armak Company products), Vulcan XC-72 (Cabot Company products), and Super P (MMM Company products). Among these, carbon nanotubes, carbon nanofibers, and carbon black are preferable as the conductive material for the present disclosure, with carbon nanotubes being the most preferable. The conductive network of carbon nanotubes can mitigate the lifting phenomenon of the binder during the drying process of the positive electrode slurry, making it the most preferable conductive material for the positive electrode of the present disclosure.

The BET specific surface area of the carbon nanotubes is 100 m$^2$/g to 1,000 m$^2$/g, 150 m$^2$/g to 800 m$^2$/g, 150 m$^2$/g to 500 m$^2$/g, 150 m$^2$/g to 300 m$^2$/g, or 150 m$^2$/g to 200 m$^2$/g.

The positive electrode conductive material may be included in the positive electrode active material layer in an amount of 0.1 to 30 wt%, more specifically 0.1 to 10 wt%, and more specifically 0.5 to 5 wt%.

The positive electrode binder may be any conventionally used binder polymer without restriction. Examples include polyvinylidene fluoride-hexafluoropropylene (PVDF-co-HFP), polyvinylidene fluoride (PVDF), polyacrylonitrile, polymethyl methacrylate, styrene-butadiene rubber (SBR), carboxymethyl cellulose (CMC), and other types of binder polymers may be used.

The positive electrode binder may be included in the positive electrode active material layer in an amount of 0.1 to 30 wt%, more specifically 0.1 to 10 wt%, and more specifically 0.5 to 5 wt%.

According to an embodiment of the present disclosure, a lithium secondary battery including the above-described positive electrode and/or negative electrode is provided. The lithium secondary battery may include a positive electrode, a negative electrode, a separator interposed between the positive electrode and the negative electrode, and an electrolyte.

The lithium secondary battery of the present disclosure may be manufactured by conventional methods known in the art. For example, it may be manufactured by inserting a separator between the negative electrode and positive electrode and introducing an electrolyte.

In the lithium secondary battery, the positive electrode and/or negative electrode may be the electrodes described above.

The separator may be any porous material commonly used as a separator in lithium secondary batteries, such as a polyolefin-based porous membrane or nonwoven fabric; however, it is not limited to these examples. It is particularly desirable that the separator has low resistance to ion movement and excellent electrolyte wetting ability.

Examples of polyolefin-based porous membranes include membranes formed with polymers including polyethylene such as high-density polyethylene, linear low-density polyethylene, low-density polyethylene, and ultra-high-molecular-weight polyethylene, polyolefin polymers such as polypropylene, polybutylene, and polypenten, either alone or in combination.

The nonwoven fabrics include polyolefin-based nonwoven fabrics, as well as nonwoven fabrics formed with polymers such as polyethylene terephthalate (PET), polybutylene terephthalate, polyester, polyacetal, polyamide, polycarbonate, polyimide, polyetheretherketone, polyethersulfone, polyphenylene oxide, polyphenylenesulfide, polyethylenenaphthalene, etc., either alone or in combination. The structure of the nonwoven fabric may be a spunbond nonwoven fabric composed of long fibers or a meltblown nonwoven fabric.

The thickness of the porous substrate is not particularly limited but may be 5 to 50 $\mu$m, and the pore size and porosity of the porous substrate are also not particularly limited but may be 0.01 to 50 $\mu$m and 10 to 95%, respectively.

Meanwhile, to enhance the mechanical strength of the separator composed of the porous substrate and suppress short circuits between the positive electrode and negative electrode, the porous substrate may further include a porous coating layer including inorganic particles and a binder polymer on at least one surface thereof.

Meanwhile, in the lithium secondary battery, the electrolyte may include organic solvents and lithium salts commonly used in electrolytes, and there are no particular restrictions.

The organic solvents may be used without special limitation as long as they serve as a medium through which ions involved in the electrochemical reactions of the battery can move. Specifically, the organic solvents may include ester-based solvents such as methyl acetate, ethyl acetate, $\gamma$-butyrolactone, and $\varepsilon$-caprolactone; ether-based solvents such as dibutyl ether or tetrahydrofuran; ketone-based solvents such as cyclohexanone; aromatic hydrocarbon solvents such as benzene and fluorobenzene; carbonate-based solvents such as dimethylcarbonate (DMC), diethylcarbonate (DEC), methylethylcarbonate (MEC), ethylmethylcarbonate (EMC), ethylene carbonate (EC), and propylene carbonate (PC).

Among these, carbonate-based solvents are preferable, and a mixture of cyclic carbonates (e.g., ethylene carbonate or propylene carbonate) with high ionic conductivity and high dielectric constant, which can enhance the charge-discharge performance of batteries, and low-viscosity linear carbonate compounds (e.g., ethylmethylcarbonate, dimethyl carbonate, or diethyl carbonate, etc.) is more preferable.

The lithium salt can be used without any special limitation if it is a compound capable of supplying lithium ions for use in lithium secondary batteries. Specifically, the lithium salt includes $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, LiCl, LiI, or $LiB(C_2O_4)_2$, etc. The lithium salt is preferably included in the electrolyte at a concentration of approximately 0.6 mol% to 2 mol%.

In addition to the above electrolyte components, the electrolyte may include one or more additives such as pyridine, triethyl phosphate, triethanolamine, cyclic ethers, ethylene diamine, n-glyme, hexane triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxy ethanol, or aluminum trichloride for the purpose of improving the battery life characteristics, suppressing the reduction in battery capacity, and improving the discharge capacity of the battery. In this case, the additives may be included in an amount of 0.1 to 5 wt% based on the total weight of the electrolyte.

The lithium secondary battery of the present disclosure may be manufactured by forming an electrode assembly by disposing a separator between the positive electrode and the negative electrode, and then inserting the electrode assembly into a cylindrical battery case or a prismatic battery case and injecting an electrolyte. Alternatively, the electrode assembly may be stacked, impregnated with the electrolyte, and the resulting product may be placed in a battery case and sealed to manufacture the battery.

When manufacturing the lithium secondary battery of the present disclosure, the organic solvent selected from the group consisting of N-methyl-2-pyrrolidone (NMP), acetone, ethanol, propylene carbonate, ethyl methyl carbonate, ethylene carbonate, and dimethyl carbonate, which was used in the positive electrode manufacturing process, may be removed by drying the electrode assembly. If the electrolyte used in the positive electrode manufacturing process has the same composition as the organic solvent used in the positive electrode manufacturing process, the drying process of the electrode assembly may be omitted.

Unlike the lithium secondary battery described above, the lithium secondary battery according to another embodiment of the present disclosure may be an all-solid-state battery.

The battery case may adopt a structure commonly used in the field, and there are no restrictions on the shape based on the application of the battery, and for example, may be cylindrical using a can, prismatic, pouch-type, or coin-type, etc.

The lithium secondary battery according to the present disclosure exhibits excellent capacity and capacity retention rate, and is therefore useful in portable devices such as mobile phones, laptops, and digital cameras, as well as in energy storage systems (ESS) and electric vehicles such as hybrid electric vehicles (HEV).

The present disclosure will now be described in more detail with reference to the following examples. However, the examples are merely illustrative examples of the present disclosure, and the scope of the present disclosure is not limited to these examples.

**Example 1**

(Preparation of negative electrode slurry)

As the negative electrode active material, artificial graphite with a sphericity of 0.85 ($D_{50}$ 23 $\mu$m, specific surface area 1.0 m$^2$/g, tap density 0.9 g/cc), styrene-butadiene rubber (SBR) as the binder, carboxymethyl cellulose (CMC) as the thickener, carbon nanotubes as a conductive material were mixed and stirred in deionized water at a weight ratio of 96:2.5:1:0.5 to prepare a negative electrode slurry (solid content: 50 wt%).

(Adhesive tape attachment step)

A 10 $\mu$m thick copper foil being transferred at a speed of 20 m/min was supplied with the adhesive tape, and the adhesive tape, having the shape shown in FIG. 4, was continuously attached to both edges of the coating part predetermined portion of the copper foil along the transfer direction of the copper foil. The adhesive strength of the adhesive tape was 10 gf/inch, and its thickness was 16 $\mu$m.

(Application of the negative electrode slurry)

The negative electrode slurry was applied to the coating part predetermined portion. At this time, some of the negative electrode slurry was also applied to the areas adjacent to the coating part predetermined portion of the adhesive tape. The loading amount of the negative electrode slurry was set such that the thickness after drying was 120 $\mu$m.

(Drying step)

The negative electrode sheet applied with the negative electrode slurry was placed in a drying oven and dried at a temperature of 120°C.

(Removal of adhesive tape)

After the drying step, the adhesive tape was peeled off and removed from the copper foil.

(Rolling and notching step)

After removing the adhesive tape, the copper foil formed with the negative electrode active material layer was roll-pressed, and then negative electrode tabs were formed as shown in FIG. 8. They were then cut to the size of a single negative electrode (10 cm in the X direction and 20 cm in the Y direction), completing the manufacturing of the negative electrode.

**Examples 2 to 9**

Except for changing the thickness A of the adhesive tape, the thickness B of the electrode active material layer after the drying step, and the adhesive strength C of the adhesive tape as shown in Table 1, the negative electrode was manufactured using the same method as in Example 1.

**Example 10**

Except for using an adhesive tape with a protruding part as shown in FIG. 15, the negative electrode was manufactured using the same method as in Example 1.

**Experimental Example 1: Evaluation of detachment rate**

By preparing 40 negative electrodes each according to Examples 1 to 10, the area around the boundary where the adhesive tape has peeled off from the negative electrode was visually inspected, and the number of negative electrodes where detachment has occurred was counted. The detachment rate was calculated as the percentage of the number of negative electrodes where detachment has occurred out of 40 negative electrodes, and the results were presented in Table 1.

**Experimental Example 2: Measurement of sliding length**

For each negative electrode prepared according to Examples 1 to 10, the transverse direction (Y direction) length of the negative electrode active material layer was measured from the point where the thickness of the negative electrode active material layer begins to decrease at the coating part of the negative electrode to the distal end of the coating part, and the result was shown in Table 1. The thickness change of the negative electrode active material layer was measured using a confocal displacement sensor (manufacturer: Keyence).

[Table 1]

| | Thickness of adhesive tape A ($\mu$m) | Thickness of electrode active material layer after drying step B ($\mu$m) | Adhesive strength of adhesive tape C (gf/inch) | B/(AXC) | Shape of adhesive tape | detachment rate (%) | Length of sliding region ($\mu$m) |
|---|---|---|---|---|---|---|---|
| Example 1 | 16 | 80 | 5 | 1 | Straight type (FIG. 4) | 7.5 | 0.6 |
| Example 2 | 16 | 120 | 5 | 1.5 | | 5 | 0.5 |
| Example 3 | 16 | 120 | 10 | 0.75 | | 10 | 0.4 |
| Example 4 | 16 | 80 | 10 | 0.5 | | 12.5 | 0.5 |
| Example 5 | 16 | 120 | 2 | 3.75 | | 0 | 0.5 |
| Example 6 | 40 | 120 | 5 | 0.6 | | 7.5 | 0.6 |
| Example 7 | 16 | 200 | 2 | 6.25 | | 0 | 0.6 |
| Example 8 | 40 | 60 | 10 | 0.15 | | 17.5 | 0.55 |
| Example 9 | 40 | 40 | 10 | 0.1 | | 25 | 0.6 |

(continued)

|  | Thickness of adhesive tape A ($\mu$m) | Thickness of electrode active material layer after drying step B ($\mu$m) | Adhesive strength of adhesive tape C (gf/inch) | B/(AXC) | Shape of adhesive tape | detach ment rate (%) | Length of sliding region ($\mu$m) |
|---|---|---|---|---|---|---|---|
| Example 10 | 16 | 80 | 5 | 1 | Protruding type (FIG. 15) | 5 | 0.6 |

As shown in Table 1, the electrodes manufactured according to the examples of the present disclosure have a sliding region length of 1 mm or less. Accordingly, it is expected that the risk of NP-ratio reversal will be significantly reduced. Furthermore, in the present disclosure, when the following Condition 1 is satisfied, it can be seen that the detachment rate of the electrode active material decreases. Therefore, it is desirable to control the manufacturing process of the electrode so that the following Condition 1 is satisfied.

[Condition 1]

$$0.15 \leq B/(A \times C)$$

The present disclosure has been described in more detail above with reference to the drawings and embodiments. However, it should be understood that the configurations described in the drawings or embodiments are only one embodiment of the disclosure and do not represent all of the technical ideas of the disclosure, and that there may be various equivalents and modifications that may be substituted for them at the time of filing the present application.

**Claims**

1. An electrode manufacturing method comprising:

   attaching an adhesive tape to edges of a coating part predetermined portion of an electrode current collector sheet, the coating part predetermined portion being where an electrode active material layer is to be formed;
   a coating step of applying an electrode slurry to the predetermined portion of the coating part;
   a drying step to remove solvent from the electrode slurry; and
   a step of peeling off and removing the adhesive tape from the electrode current collector sheet, wherein
   in the step of attaching the adhesive tape, the adhesive tape is continuously attached in a transfer direction of the electrode current collector sheet.

2. The electrode manufacturing method of claim 1, wherein

   a thickness A of the adhesive tape, a thickness B of the electrode active material layer after the drying step, and an adhesive strength C of the adhesive tape satisfy the following Condition 1:

[Condition 1]

$$0.15 \leq B/(A \times C)$$

   In condition 1, A and B are values in $\mu$m, and C is the adhesive strength measured by a 90° peel test after attaching the adhesive tape to a SUS plate, and is a value in gf/inch.

3. The electrode manufacturing method of claim 2, wherein
   the adhesive strength of the adhesive tape is 20 gf/inch or less.

4. The electrode manufacturing method of claim 2, wherein

the thickness of the adhesive tape is 150 $\mu$m or less.

5. The electrode manufacturing method of claim 2, wherein
   the thickness of the electrode active material layer after the drying step is 50 $\mu$m or more.

6. The electrode manufacturing method of claim 1, wherein
   the adhesive tape is a pressure-sensitive adhesive tape.

7. The electrode manufacturing method of claim 1, wherein
   the coating step comprises:

   an upper surface coating step of applying electrode slurry to an upper surface of the electrode current collector sheet; and
   a lower surface coating step of applying electrode slurry to a lower surface of the electrode current collector sheet, and
   wherein the drying step comprises:

   an upper surface drying step of drying the electrode slurry applied in the upper surface coating step; and
   a lower surface drying step of drying the electrode slurry applied in the lower surface coating step.

8. The electrode manufacturing method of claim 7, wherein
   in the step of attaching the adhesive tape, the adhesive tape is attached to the upper surface and lower surface of the electrode current collector sheet, respectively, such that the adhesive tape is attached to completely overlapped with the electrode current collector sheet in between.

9. The electrode manufacturing method of claim 1, wherein the adhesive tape comprises:

   a base part having a predetermined width and extending along the transfer direction of the electrode current collector sheet; and
   a protruding part protruding from the base part toward the coating part predetermined portion along a transverse direction of the electrode current collector sheet.

10. The electrode manufacturing method of claim 1, further comprising:
    a rolling step of roll-pressing the electrode current collector sheet with the electrode active material layer formed thereon after the step of removing the adhesive tape.

11. The electrode manufacturing method of claim 1, wherein a binder content in the electrode slurry is 5 parts by weight or less with respect to 100 parts by weight of a solid content of the electrode slurry.

12. An electrode comprising:

    a coating part in which an electrode active material layer is laminated on an electrode current collector sheet; and
    a non-coating part located on at least one edge based on a transverse direction (Y direction) of the electrode current collector sheet, and having an electrode current collector sheet that is exposed, wherein
    in the electrode active material layer, an end surface with respect to the transverse direction of the electrode active material layer is perpendicular to a plane of the electrode current collector sheet.

13. The electrode of claim 12, wherein

    the electrode active material layer includes a sliding region where the thickness of the electrode active material layer gradually decreases in a direction from the coating part toward the non-coating part, and
    wherein a transverse direction length of the sliding region is 1mm or less.

14. The electrode of claim 12, wherein a ratio of a minimum thickness T2 of the sliding region to a maximum thickness T1 of the sliding region is 0.8 or more.

[FIG. 1]

[FIG. 2]

[FIG. 3]

| ADHESIVE TAPE ATTACHMENT STEP | ~P110 |

↓

| COATING STEP | ~P120 |

↓

| DRYING STEP | ~P130 |

↓

| ADHESIVE TAPE REMOVAL STEP | ~P140 |

[FIG. 4]

AFTER P110    AFTER P120 AND P130    AFTER P140

[FIG. 5]

[FIG. 6]

```
┌─────────────────────────────────────────┐
│   ADHESIVE TAPE ATTACHMENT STEP          │──P110
└─────────────────────────────────────────┘
                    │
                    ▼
┌─────────────────────────────────────────┐
│            COATING STEP                  │──P120
└─────────────────────────────────────────┘
                    │
                    ▼
┌─────────────────────────────────────────┐
│            DRYING STEP                   │──P130
└─────────────────────────────────────────┘
                    │
                    ▼
┌─────────────────────────────────────────┐
│     ADHESIVE TAPE REMOVAL STEP           │──P140
└─────────────────────────────────────────┘
                    │
                    ▼
┌─────────────────────────────────────────┐
│            ROLLING STEP                  │──P150
└─────────────────────────────────────────┘
```

[FIG. 7]

[FIG. 8]

[FIG. 9]

```
┌─────────────────────────────────────────────┐
│  ADHESIVE TAPE UPPER SURFACE ATTACHMENT STEP │──P111
└─────────────────────────────────────────────┘
                      │
                      ▼
┌─────────────────────────────────────────────┐
│         UPPER  SURFACE  COATING  STEP        │──P121
└─────────────────────────────────────────────┘
                      │
                      ▼
┌─────────────────────────────────────────────┐
│         UPPER  SURFACE  DRYING  STEP         │──P131
└─────────────────────────────────────────────┘
                      │
                      ▼
┌─────────────────────────────────────────────┐
│         ADHESIVE  TAPE  REMOVAL  STEP        │──P140
└─────────────────────────────────────────────┘
                      │
                      ▼
┌─────────────────────────────────────────────┐
│  ADHESIVE TAPE LOWER SURFACE ATTACHMENT STEP │──P112
└─────────────────────────────────────────────┘
                      │
                      ▼
┌─────────────────────────────────────────────┐
│         LOWER  SURFACE  COATING  STEP        │──P122
└─────────────────────────────────────────────┘
                      │
                      ▼
┌─────────────────────────────────────────────┐
│         LOWER  SURFACE  DRYING  STEP         │──P132
└─────────────────────────────────────────────┘
                      │
                      ▼
┌─────────────────────────────────────────────┐
│         ADHESIVE  TAPE  REMOVAL  STEP        │──P140
└─────────────────────────────────────────────┘
```

[FIG. 10]

```
┌────────────────────────────────────┐
│   ADHESIVE  TAPE  ATTACHMENT  STEP  │──P110
└────────────────────────────────────┘
                    │
                    ▼
┌────────────────────────────────────┐
│     UPPER  SURFACE  COATING  STEP   │──P121
└────────────────────────────────────┘
                    │
                    ▼
┌────────────────────────────────────┐
│     UPPER  SURFACE  DRYING  STEP    │──P131
└────────────────────────────────────┘
                    │
                    ▼
┌────────────────────────────────────┐
│     LOWER  SURFACE  COATING  STEP   │──P122
└────────────────────────────────────┘
                    │
                    ▼
┌────────────────────────────────────┐
│     LOWER  SURFACE  DRYING  STEP    │──P132
└────────────────────────────────────┘
                    │
                    ▼
┌────────────────────────────────────┐
│    ADHESIVE  TAPE  REMOVAL  STEP    │──P140
└────────────────────────────────────┘
```

[FIG. 11]

[FIG. 12]

[FIG. 13]

[FIG. 14]

(a)

11

32 } 30
31

(b)

12

(c)

12

X
Y

[FIG. 15]

[FIG. 16]

10

NCP          CP          NCP

## INTERNATIONAL SEARCH REPORT

International application No.

**PCT/KR2025/005369**

### A. CLASSIFICATION OF SUBJECT MATTER

**H01M 4/04**(2006.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/04(2006.01); H01M 10/40(2006.01); H01M 2/26(2006.01); H01M 4/02(2006.01); H01M 4/13(2010.01); H01M 50/531(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전극(electrode), 집전체 시트(current collector sheet), 전극활물질층(electrode active material layer), 점착성 테이프(adhesive tape), 코팅(coating), 건조(dry), 박리(peel off)

### C. DOCUMENTS CONSIDERED TO BE RELEVANT

| Category* | Citation of document, with indication, where appropriate, of the relevant passages | Relevant to claim No. |
|---|---|---|
| DX | JP 2005-183181 A (DAINIPPON INK & CHEM INC.) 07 July 2005 (2005-07-07)<br>claims 1, 6; paragraphs [0020], [0026], [0027], [0035], [0038], [0040], [0041], [0052], [0053]; figures 2, 3, 8, 9 | 1-8,11-14 |
| DY | | 9,10 |
| Y | KR 10-2022-0054995 A (LG ENERGY SOLUTION, LTD.) 03 May 2022 (2022-05-03)<br>claims 1, 10, 11 | 9,10 |
| X | KR 10-2023-0008975 A (LG ENERGY SOLUTION, LTD.) 17 January 2023 (2023-01-17)<br>abstract; claims 1-10; paragraphs [0008], [0062]-[0068]; figures 1-8 | 1,6-8,11-14 |
| A | KR 10-2019-0060577 A (LG CHEM, LTD.) 03 June 2019 (2019-06-03)<br>abstract; claims 1-10 | 1-14 |

☑ Further documents are listed in the continuation of Box C.   ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **22 July 2025** | **23 July 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2025/005369**

## C.    DOCUMENTS CONSIDERED TO BE RELEVANT

| Category* | Citation of document, with indication, where appropriate, of the relevant passages | Relevant to claim No. |
|---|---|---|
| A | JP 2000-251942 A (MATSUSHITA BATTERY INDUSTRIAL CO., LTD.) 14 September 2000 (2000-09-14)<br>abstract; claims 1-7 | 1-14 |

Form PCT/ISA/210 (second sheet) (July 2022)

**INTERNATIONAL SEARCH REPORT**
Information on patent family members

International application No.

**PCT/KR2025/005369**

| Patent document cited in search report | | | Publication date (day/month/year) | Patent family member(s) | | | Publication date (day/month/year) |
|---|---|---|---|---|---|---|---|
| JP | 2005-183181 | A | 07 July 2005 | None | | | |
| KR | 10-2022-0054995 | A | 03 May 2022 | CN | 115280544 | A | 01 November 2022 |
| | | | | EP | 4099423 | A1 | 07 December 2022 |
| | | | | EP | 4099423 | A4 | 28 August 2024 |
| | | | | US | 2023-0378418 | A1 | 23 November 2023 |
| | | | | WO | 2022-092577 | A1 | 05 May 2022 |
| KR | 10-2023-0008975 | A | 17 January 2023 | CN | 117480627 | A | 30 January 2024 |
| | | | | EP | 4333090 | A1 | 06 March 2024 |
| | | | | JP | 2024-520732 | A | 24 May 2024 |
| | | | | US | 2024-0290945 | A1 | 29 August 2024 |
| | | | | WO | 2023-282666 | A1 | 12 January 2023 |
| KR | 10-2019-0060577 | A | 03 June 2019 | KR | 10-2403673 | B1 | 27 May 2022 |
| JP | 2000-251942 | A | 14 September 2000 | JP | 4233670 | B2 | 04 March 2009 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240053075
- JP 2005183181 A